# FASCICULE DE BREVET EUROPEEN

(11) **EP 1 493 600 B1**
(45) Date de publication et mention de la délivrance du brevet: **22.11.2006**
(21) Numéro de dépôt: 04015170.6
(22) Date de dépôt: 29.06.2004
(51) Int. Cl.: B60H 1/00, B60N 2/56

(54) **Dispositif de jonction entre une installation de ventilation, de chauffage et/ou de climatisation et un siège, d'un véhicule notamment**
Anschlussvorrichtung zwischen einem Fahrzeugsitz und der Lüftung und/oder Heizung und/oder Klimatisierungssystem
Connection device between a vehicle seat and the ventilation and/or heating and/or conditioning system

(30) Priorité: 30.06.2003 FR 0307923
(43) Date de publication de la demande: 05.01.2005
(73) Titulaire: VALEO SYSTEMES THERMIQUES, 78321 Le Mesnil St Denis Cedex (FR)
(72) Inventeur: Petitjean, Pascale, 78640 Neauphle le Vieux (FR); Loup, Didier, 78310 Maurepas (FR); Feuillard, Vincent, 78320 Le Mesnil St Denis (FR)

(56) Documents cités:
- WO-A1-97/05421
- US-A- 4 840 115
- US-A- 5 921 100
- US-A1- 2001 004 008
- US-B1- 6 478 369
- PATENT ABSTRACTS OF JAPAN vol. 2000, no. 05, 14 septembre 2000 (2000-09-14) -& JP 2000 052747 A (ARACO CORP;DENSO CORP), 22 février 2000 (2000-02-22)
- PATENT ABSTRACTS OF JAPAN vol. 1998, no. 01, 30 janvier 1998 (1998-01-30) -& JP 09 254642 A (TAKAGAKI KATSUHIRO), 30 septembre 1997 (1997-09-30)

## Description

L'invention se rapporte à un dispositif de jonction entre un siège et une installation de ventilation, de chauffage et/ou de climatisation, notamment pour un véhicule automobile, comprenant un conduit de liaison.

Dans les véhicules actuels, il existe différentes façons de réchauffer ou de rafraîchir l'habitacle d'un véhicule. La solution la plus répandue consiste à envoyer de l'air dans l'habitacle à partir d'un appareil de ventilation, de chauffage et de climatisation placé typiquement dans la planche de bord et comprenant une pluralité de conduites d'aération aboutissant à des sorties d'air orientables dirigeant l'air dans différentes zones de l'habitacle (pare-brise, pied, torse, tête). Dans ce type d'installation, le confort thermique des passagers n'est pas toujours satisfaisant.

Une solution à ce problème consiste à utiliser directement les sièges de l'habitacle pour propulser et diriger l'air vers les passagers assis dessus. Ainsi, le brevet US 6 478 369 décrit un ensemble comprenant un appareil de ventilation, de chauffage et/ou de climatisation pour véhicule automobile, au moins un siège avant et un conduit relais de circulation d'air reliant de manière étanche à l'air ledit appareil et le siège. Ce conduit relais est fixé au plancher du véhicule et présente une partie flexible, par exemple en accordéon, pour s'adapter aux mouvements possibles d'avant en arrière et de haut en bas du siège et de son assise. Un tel dispositif est également connu de JP 2000-52747. Selon d'autres agencements, un pulseur relais est placé dans un boîtier sous le siège et permet de propulser l'air en direction de différentes zones du siège telles que l'assise ou le dossier. Les brevets US 5 921 100, US 6 059 018 et US 2001/0004008 décrivent également un ensemble du même type dont le conduit relais de circulation d'air est muni d'une partie verticale en forme d'accordéon.

L'inconvénient principal de ces solutions est que les mouvements du siège sont limités par la forme du conduit relais, sa position par rapport au siège et à l'appareil de climatisation ou du pulseur relais, et sa flexibilité. En effet, pour des questions de confort du passager ou du conducteur, les sièges actuels sont réglables à la fois d'avant en arrière, de haut en bas et également en inclinaison de l'assise, souvent selon deux axes, un placé à l'avant et un autre placé à l'arrière de ladite assise. De grandes amplitudes de mouvements sont nécessaires pour adapter correctement la position du siège à la morphologie des conducteurs et leur fournir un très bon niveau de confort garantissant une conduite plus sûre. Ainsi, un conduit relais de circulation d'air tel que ceux décrits dans les documents de l'art antérieur n'est pas adapté à de telles amplitudes, ou bien il y a des risques importants de fuite d'air au niveau de la liaison conduit-siège ou de la liaison conduit-appareil de climatisation.

Par ailleurs, ces solutions sont fragiles au détriment de leur durée de vie, et présente un caractère d'être visible depuis l'intérieur de l'habitacle.

Pour résoudre ces problèmes, l'invention propose de réaliser un conduit qui s'adapte mieux aux mouvements du siège et ce même sur de grandes amplitudes, en particulier par l'utilisation de portions articulées entre elles ou de manière analogue montées mobiles en coulissement les unes par rapport aux autres. On entend par articulation un mode de réunion de plusieurs pièces mobiles les unes par rapport aux autres.

Plus précisément, le dispositif de la présente invention est un dispositif de jonction entre un siège et un conduit d'amenée d'air en provenance notamment d'une installation de ventilation, de chauffage et/ou de climatisation d'un véhicule. Cette installation est notamment l'installation principale du véhicule, voire indépendamment ou en complément une installation spécifique affectée au ou aux siège(s) du véhicule. Ce dispositif de jonction comprend un conduit de liaison entre le conduit d'amenée et le siège.

Dans sa généralité, un tel dispositif de jonction est principalement reconnaissable en ce qu'il comprend au moins deux d'éléments de connexion aéraulique respectivement affectés au conduit d'amenée pour un premier élément et affecté au siège mobile pour un deuxième élément. Le conduit de liaison est à géométrie variable et dispose d'au moins un degré de liberté, qui est monté à ses extrémités respectives sur les éléments de connexion aéraulique, de sorte que la mobilité du siège soit autorisée selon les différentes directions de déplacement de celui-ci, à partir d'au moins une jonction déformable entre les au moins deux éléments de connexion aéraulique qui sont respectivement solidaires du siège et du conduit d'amenée.

De préférence, l'un des éléments de connexion aéraulique est conformé en boîtier. Selon une forme avantageuse de réalisation, ce boîtier est mis à profit pour loger au moins un organe relais de propulsion d'air, pulseur notamment.

Le siège est susceptible d'être mobile selon au moins une direction de déplacement, et que le conduit est déformable suivant cette direction de déplacement du siège. Le dispositif de la présente invention est organisé suivant différentes variantes de réalisation adaptées aux facultés de déplacement du siège. Notamment, le déplacement du siège est susceptible d'être réalisé suivant plusieurs directions, isolément ou en combinaison : une direction de déplacement longitudinale par exemple d'avant en arrière, une direction verticale par exemple de haut en bas, une direction transversale par exemple de gauche à droite, une direction en pivotement du siège sur lui-même, et une direction en basculement du siège par rapport au plancher. Ces directions sont notamment orientées suivant un repère orthonormé. Selon le cas d'espèce, le conduit est déformable suivant la ou les directions correspondantes du siège. On comprendra par conduit déformable un conduit susceptible de changer de forme pour accompagner les mouvements du siège, sans que sa structure intrinsèque n'en soit modifiée.

Selon un mode avantageux de réalisation exploitant l'organisation des organes de connexion aéraulique en boîtier, une chambre de mixage est ménagée dans l'un quelconque de ces éléments de connexion aéraulique, et de préférence le cas échéant celui logeant l'organe de propulsion d'air. Ces dispositions visent à permettre de mélanger de l'air en provenance de l'habitacle, avec l'air en provenance du conduit d'amenée.

La chambre de mixage est accessoirement équipée d'un organe de chauffage secondaire de l'air en provenance de l'habitacle, CTP notamment.

Selon un exemple avantageux de réalisation, ledit élément de connexion aéraulique comporte un premier compartiment ménageant la chambre de mixage, qui est disposé en aval d'un deuxième compartiment d'admission de l'air en provenance du conduit d'amenée , ces deux compartiments étant séparés par un organe de répartition , tel qu'un volet ou analogue.

Ces dispositions permettent de modifier rapidement la température de l'air en provenance du conduit d'amenée , sans attendre notamment que cet air en provenance d'une installation distante distribue un air de température recherchée. Notamment, le siège est susceptible d'être rapidement refroidi sans avoir à mettre en oeuvre un évaporateur secondaire, et inversement est susceptible d'être rapidement chauffé par la mise en oeuvre de l'organe de chauffage secondaire.

La chambre de mixage est préférentiellement disposée en amont de l'organe de propulsion d'air, et avantageusement à l'intérieur du deuxième élément de connexion, qui loge préférentiellement ce dernier.

Le premier élément de connexion aéraulique est notamment conformé en boîtier de liaison avec un conduit en provenance du conduit d'amenée. Selon un mode avantageux de réalisation, ce premier élément de connexion aéraulique forme un ensemble monobloc avec un boîtier de raccordement d'un conduit d'aération de pied arrière au conduit d'amenée.

On comprendra que l'un quelconque des éléments de connexion aéraulique est susceptible d'être conformé en boîtier ménageant la volute de l'organe de propulsion d'air.

Selon un mode de réalisation, les éléments de connexion aéraulique sont chacun conformés en boîtier de liaison, sur lesquels boîtiers est en prise articulée le conduit. Selon ce mode préféré de réalisation, le conduit est composé d'au moins deux bras et forme par exemple un pantographe à au moins deux bras articulés à leur jonction, ou encore est constitué d'un bras télescopique articulé à ses extrémités sur un élément aéraulique correspondant. On notera que le siège est susceptible d'être mobile selon deux ou trois directions de déplacement.

Plus particulièrement, une première extrémité d'au moins un premier bras du conduit s'articule à l'intérieur d'un premier boîtier de liaison fixé le cas échéant à l'organe de propulsion d'air.

Plus particulièrement encore, une seconde extrémité d'au moins un second bras du conduit s'articule à l'intérieur d'un second boîtier de liaison fixé au siège.

On notera que la première extrémité du premier bras et la seconde extrémité du second bras sont notamment reliées respectivement de manière étanche à l'air à leur boîtier correspondant, par une liaison pivot ou par coulissement par exemple.

Plus particulièrement selon une première variante de réalisation, le conduit forme un pantographe à au moins deux bras articulés à leur jonction.

Selon diverses caractéristiques secondaires :
- les au moins deux bras sont articulés autour d'au moins un axe de rotation sensiblement perpendiculaire à deux directions de déplacement du siège ;
- le siège étant déplaçable respectivement selon deux directions sensiblement perpendiculaires l'une à l'autre, par exemple d'avant en arrière et de haut en bas, les deux bras du conduit sont articulés autour d'un axe de rotation perpendiculaire aux deux directions de déplacement du siège ;
- les deux bras sont articulés par une liaison pivot en forme de coude reliant une seconde extrémité du au moins premier bras et une première extrémité du au moins second bras ;
- l'une au moins desdites extrémités du premier bras et l'une au moins desdites extrémités du second bras se terminent chacune par une portion de cylindre ;
- les boîtiers comportent également une portion de cylindre ;
- les portions de cylindre s'emboîtent respectivement l'une dans l'autre ;
- les portions de cylindrent se juxtaposent de manière coaxiale l'une avec l'autre ;
- lequel les portions de cylindre comportent au moins une lèvre surmoulée qui assure une étanchéité à l'air à l'intérieur de chaque boîtier de liaison ;
- la première extrémité du premier bras et la seconde extrémité du second bras se terminent chacune par une portion de sphère pour former une liaison rotule avec leur boîtier correspondant ;
- ladite liaison entre les bras est munie d'une charnière film qui permet la rotation de manière étanche à l'air des bras entre eux ;
- la charnière film est moulée d'une pièce avec les deux bras ;
- une plaque souple est disposée de l'autre côté de la charnière film, pour former une articulation étanche à l'air des deux bras entre eux ;
- la plaque est moulée d'une pièce avec l'un des bras ;
- deux flancs latéraux sont en outre prévus de part et d'autre de la liaison entre les bras pour assurer et compléter l'étanchéité à l'air du conduit ;
- lesdits flancs sont munis de gorges externes et internes d'étanchéité et de guidage en rotation des bras articulés ;
- les gorges internes coopèrent avec des protubérances dont sont munis les bras au niveau du coude de liaison ;
- les gorges externes reçoivent la plaque souple ;
- les deux bras sont articulés entre eux par une liaison rotule ;
- la plage de rotation angulaire des bras entre eux est comprise entre 0° et au moins sensiblement 180°, et peut atteindre sensiblement 360° lorsqu'ils sont juxtaposés.

Avantageusement, le siège est un siège conducteur ou d'un passager avant d'un véhicule automobile.

Selon une deuxième variante de réalisation, le conduit est organisé en bras télescopique à au moins deux éléments à axes parallèles, préférentiellement coaxiaux, qui sont respectivement en prise articulée sur l'élément de connexion aéraulique correspondant.

Le deuxième élément de connexion aéraulique est notamment organisé en boîtier logeant au moins l'organe de propulsion d'air pour lequel il forme la volute.

Le cas échéant, le boîtier formant le deuxième élément de connexion aéraulique ménage en outre la chambre de mixage.

Le bras télescopique comprend de préférence deux éléments d'extrémité respectivement articulés sur les éléments de connexion aéraulique, et un élément médian.

Le bras télescopique est préférentiellement mobile en rotation sur lui-même pour autoriser une rotation du siège sur lui-même, et est mobile en pivotement sur les éléments de connexion aéraulique autour d'axes de pivotement respectifs organisés en paliers. Ces axes de pivotement sont notamment orientés sensiblement orthogonalement à la direction de déplacement longitudinal du siège.

Lesdits éléments d'extrémité du bras télescopique sont avantageusement rapportés de manière articulée sur l'élément de connexion aéraulique correspondant par clipsage de leur axe de pivotement à l'intérieur du palier qui leur est affecté.

Selon un autre mode de réalisation, le conduit est organisé en bras télescopique dont l'un des éléments d'extrémité constitue le premier élément de connexion aéraulique, pour permettre une mobilité du siège suivant une direction de déplacement longitudinale de très grande amplitude. L'autre élément d'extrémité du bras télescopique est relié au deuxième élément de connexion aéraulique, qui est lui-même fixé sur un élément structurel du siège, tel qu'une traverse de renfort.

Le premier élément de connexion aéraulique est par exemple agencé en fourreau de guidage en translation longitudinale du bras télescopique.

Le fourreau est de préférence fixé à un rail de guidage du siège, notamment suivant la direction de mobilité longitudinale de ce dernier, par exemple au moyen de platines de liaison dont il est équipé.

Selon un exemple préféré de réalisation du fourreau, celui-ci comporte une chambre de réception du bras télescopique pour sa mise en relation avec l'installation principale, cette chambre étant prolongée par une goulotte de guidage en translation du bras télescopique avec lequel il est conjointement mû en déplacement.

La goulotte est préférentiellement munie d'un couvercle de protection, qui est avantageusement solidaire du bras télescopique.

De préférence, le bras télescopique est muni de nervures de guidage radial à l'intérieur du fourreau.

Selon un autre mode de réalisation, le conduit est organisé en conduit souple en prise à chacune de ses extrémités sur un élément de connexion aéraulique respectif.

D'autres caractéristiques, détails et avantages de l'invention ressortiront à la lecture de la description faite en référence aux dessins annexés qui illustrent diverses variantes de réalisation de la présente invention données à titre d'exemple, ces dessins représentant respectivement:
- la figure 1 une vue schématique d'un pulseur, d'un siège de véhicule automobile et d'un conduit de liaison pour les relier de manière étanche à l'air conformément à une première variante de réalisation de la présente invention,
- la figure 2, une vue en perspective détaillée du conduit de circulation d'air et de liaison de la figure 1,
- la figure 3, une vue en coupe dudit conduit de la fig.1 représenté dans deux positions différentes,
- la figure 4 une vue de détail d'une première extrémité du conduit représenté sur la fig.3,
- la figure 5, une vue de détail d'une seconde extrémité du conduit représenté sur la fig.3,
- la figure 6, une vue de détail d'une articulation du conduit représenté sur la fig.3,
- la figure 7, une vue similaire à la figure 1 dans laquelle le siège est en position avant,
- la figure 8, une vue similaire à la figure 1 dans laquelle le siège est en position arrière, et
- la figure 9, une vue similaire à la figure 1 dans laquelle le siège est en position baissée.
- les fig.10, fig.11 et fig.12, des illustrations en coupe d'un siège de véhicule automobile équipé d'un dispositif de jonction selon une deuxième variante de réalisation de la présente invention représentée selon trois positions de déplacement du siège, respectivement en position ramassée, en position de déploiement vertical , et en position de déploiement longitudinal,
- la fig.13, une vue arrière du dispositif de jonction représenté sur les fig.10, fig.11 et fig.12,
- la fig.14, un détail de la fig.13 illustrant une chambre de mixage ménagée à l'intérieur d'un élément de connexion aéraulique reliant le conduit au siège,
- la fig.15, un schéma partiel en perspective d'un dispositif de jonction selon une troisième variante de réalisation de la présente invention,
- la fig.16, une vue schématique partielle en coupe longitudinale du dispositif représenté sur la fig.15,
- la fig.17, une vue de dessus du dispositif représenté sur les fig.15 et fig.16,
- la fig.18, une vue schématique en coupe transversale du dispositif représenté sur la fig.17.

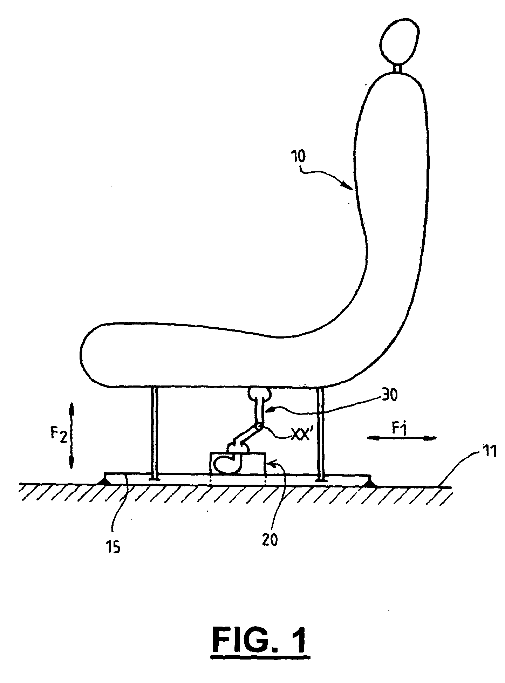

La figure 1 représente, de manière schématique, un siège (10) de véhicule automobile, typiquement le siège du conducteur ou du passager avant, un pulseur relais (20) placé sous ledit siège (10), par exemple sur le plancher (11) du véhicule, et un conduit (30) de circulation d'air et de liaison étanche entre le siège (10) et le pulseur (20).

Comme cela est répandu dans les véhicules actuels, le siège (10) peut se déplacer le long de rails (15) horizontalement d'avant en arrière selon la flèche F1 et verticalement de haut en bas selon la flèche F2. Le siège (10) peut par exemple se déplacer selon une course d'environ ± 100 mm en translation horizontale par rapport à une position médiane, et sur environ 100 mm de haut en bas entre deux positions extrêmes abaissée et élevée. Sur la figure 1, le siège (10) est représenté en position haute.

Le conduit de liaison (30) de la présente invention est particulièrement adapté aux mouvements du siège, combinés ou non, et à leurs plages de déplacement, comme cela est expliqué ci-après.

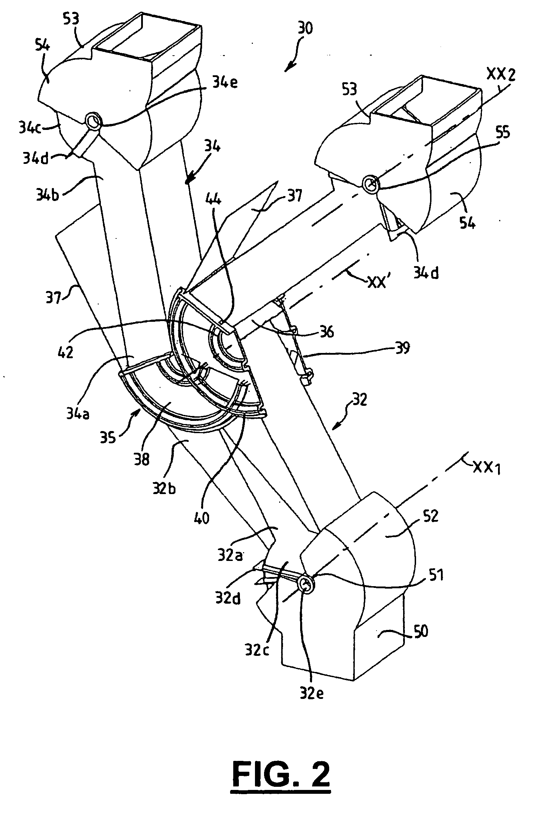

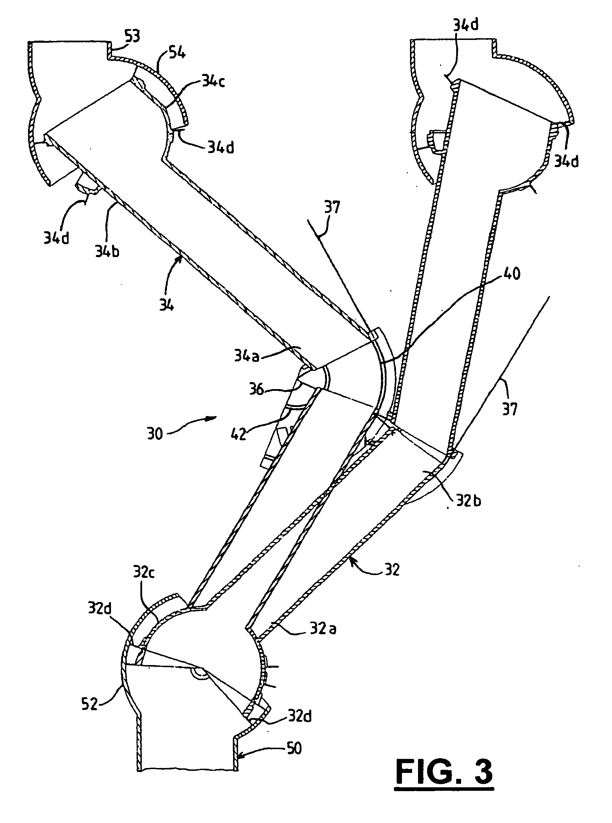

En effet, comme cela est notamment illustré sur les figures 2 et 3, le conduit de liaison (30) est réalisé en deux parties formant un « pantographe ». Plus précisément, le conduit (30) se présente sous la forme d'un premier et d'un second bras (32,34) articulés entre eux autour d'un axe de rotation XX' sensiblement perpendiculaire aux déplacements d'avant en arrière et de haut en bas du siège (10). Dans l'exemple de réalisation, l'axe XX' est sensiblement parallèle au plancher (11) et perpendiculaire à la direction principale d'allongement du conduit (30) et de chacun de ses bras.

Dans le mode de réalisation représenté, la plage de rotation des bras (32,34) entre eux est comprise, à quelques degrés près, entre environ 0°, c'est-à-dire les deux bras sensiblement en alignement, et environ 180°, c'est-à-dire les deux bras repliés l'un contre l'autre.

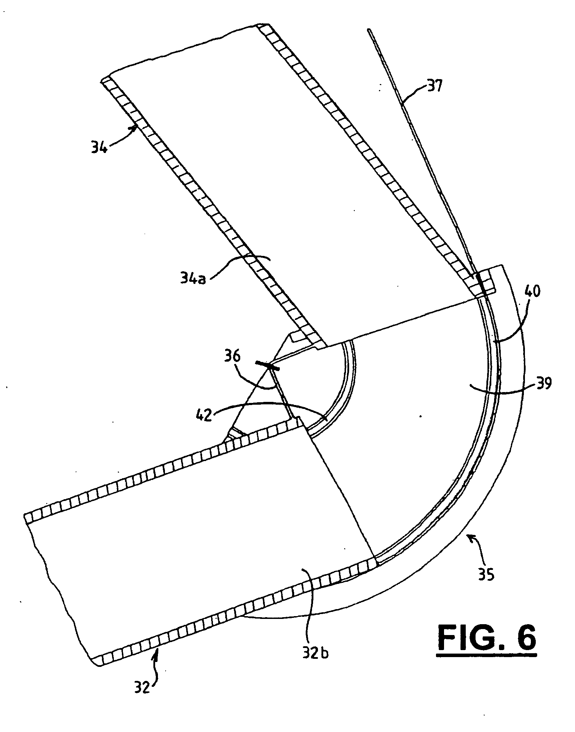

Une articulation (35) relie une première extrémité (34a) du second bras (34) et une seconde extrémité (32b) du premier bras (32) pour permettre la rotation des bras entre eux autour de l'axe XX', comme illustré également plus en détail sur la figure 6. Cette articulation (35) comprend, sur son côté interne, une mince charnière film (36) étanche liée, par exemple par moulage de matière, avec les deux bras (32,34).

Une plaque souple (37), un peu plus épaisse que la charnière film (36) et liée, par exemple par moulage de matière, avec l'un des deux bras, par exemple le bras (32), est par ailleurs disposée sur le côté externe de l'articulation (35) et concourt également à la rotation desdits bras entre eux tout en garantissant l'étanchéité à l'air du conduit (30) lors de sa rotation.

Des joues latérales (38,39), représentées notamment sur les figures 2 et 6, sont par ailleurs disposées perpendiculairement à la charnière film (36) et à la plaque souple (37), d'une part pour compléter latéralement l'étanchéité à l'air de l'articulation (35), et également pour guider en rotation les bras (32,34). A cet effet, des gorges circulaires (40,42) sont aménagées dans chaque joue latérale. Les gorges circulaires (40) reçoivent la tranche de la plaque souple (37) qui se déplace dans lesdites gorges en fonction de l'angle de rotation que prennent les bras entre eux. Les gorges circulaires (42) reçoivent quant à elles chacune un rail (44) de guidage faisant saillie des deux bras, comme illustré notamment sur la figure 2.

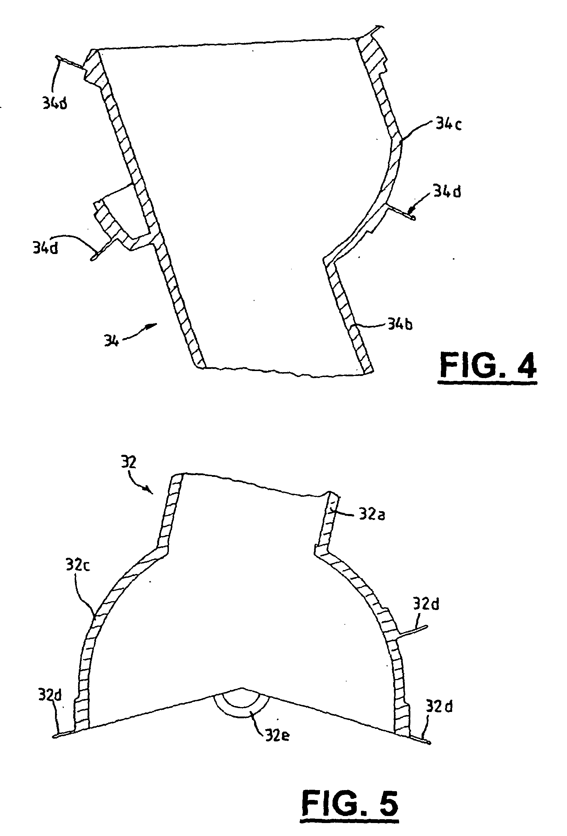

Une première extrémité (32a) du premier bras (32) du conduit (30) est reliée de manière étanche à l'air au pulseur (20) par l'intermédiaire d'un premier boîtier de raccordement (50), comme représenté sur les figures 2 et 3. A cet effet, la première extrémité (32a) se prolonge par une partie sensiblement en forme de demi-cylindre (32c) munie de lèvres d'étanchéité (32d) surmoulées, par exemple en élastomère, comme illustrées sur la figure 5. Ces lèvres d'étanchéité (32d) coopèrent avec la paroi interne du premier boîtier (50) qui présente une forme également sensiblement hémicylindrique (52). Le demi-cylindre (32c) est muni de deux protubérances latérales (32e) (voir figure 2) coopérant avec des logements (51) du premier boîtier (50) pour former un axe de rotation XX₁ sensiblement parallèle à l'axe de rotation XX' de l'articulation (35).

Une seconde extrémité (34b) du second bras (34) du conduit (30) est reliée de manière étanche à l'air au siège (10) par l'intermédiaire d'un second boîtier de raccordement (53), comme représenté sur les figures 2 et 3. A cet effet, la seconde extrémité (34b) se prolonge par une partie sensiblement en forme de demi-cylindre (34c) munie de lèvres d'étanchéité (34b) surmoulées, par exemple en élastomère, comme illustrées sur la figure 4. Ces lèvres d'étanchéité (34d) coopèrent avec la paroi interne du second boîtier (53) qui présente une forme également sensiblement hémicylindrique (54). Le demi-cylindre (34c) est également muni de deux protubérances latérales (34e) (voir figure 2) coopérant avec des logements (55) du second boîtier (53) pour former un axe de rotation XX₂ sensiblement parallèle à l'axe de rotation XX' de l'articulation (35).

A l'aide du conduit articulé (30) de la présente invention, il est possible de déplacer le siège (10) d'avant en arrière et/ou de haut en bas, sur une course importante, tout en conservant la liaison étanche entre le pulseur (20) et ledit siège (10), avec un encombrement réduit et sans avoir à utiliser de soufflets ou de pièces rapportées complexes à réaliser ou à monter/démonter.

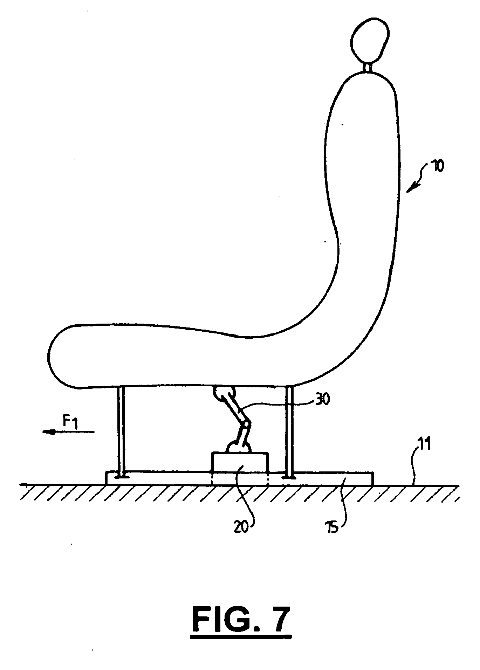

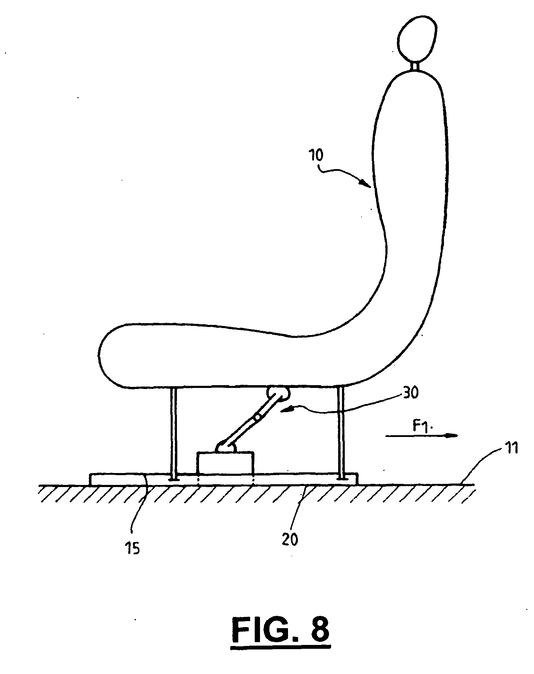

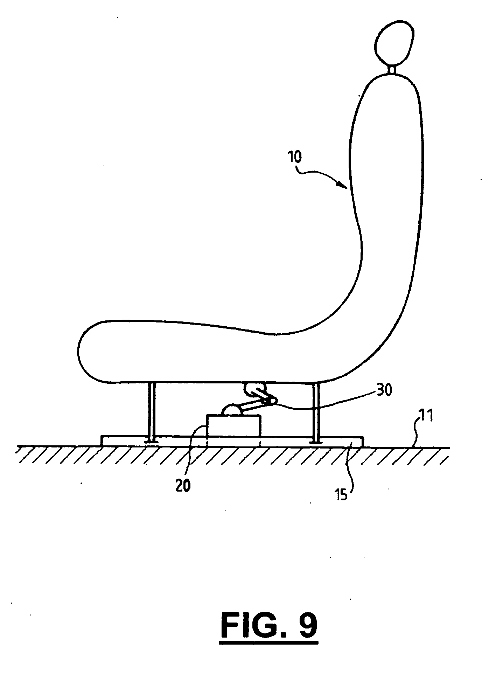

Ainsi, comme cela est illustré par les figures 7 à 9, quelque soit la position avancée (figure 7), reculée (figure 8) ou abaissée (figure 9) du siège, le conduit (30) s'adapte par rotation des bras (32,34) du conduit (30) autour de l'axe de rotation XX' et de leurs extrémités (32a,34b) à l'intérieur des boîtiers de raccordement (50,53).

Il doit être bien entendu toutefois que ces exemples sont donnés uniquement à titre d'illustration de l'objet de l'Invention dont ils ne constituent en aucune manière une limitation.

Ainsi, le conduit peut comprendre un nombre de bras supérieur à deux, et donc plusieurs articulations, de même type ou différentes.

De même, les bras (32,34) peuvent être articulés entre eux et/ou aux boîtiers de liaison (50,53) par une liaison de type rotule à trois degrés de liberté en rotation. Cela est particulièrement adapté dans le cas où le siège est mobile selon trois directions de déplacement, notamment selon trois axes respectivement perpendiculaires entre eux (haut-bas, avant-arrière et droite-gauche).

Les deux bras (32,34) ne sont pas forcément dans le prolongement l'un de l'autre comme cela est illustré dans le mode de réalisation. Ils peuvent être parallèles entre eux mais décalés le long de leur axe de rotation commun, c'est-à-dire l'un à côté de l'autre. Ainsi, il est possible de les faire pivoter l'un par rapport à l'autre sur 360°. Pour cela, il convient de remplacer le coude (35) par une liaison se présentant par exemple sous la forme de deux cylindres coaxiaux juxtaposés liés de manière étanche à l'autre et se dressant axialement à partir de la première extrémité (34a) du second bras (34) et de la seconde extrémité (32b) du premier bras (32).

La charnière film et la plaque souple peuvent être liées d'une autre manière que par moulage d'une pièce. Elles peuvent par exemple être collées, surmoulées, thermosoudées ou clipsées.

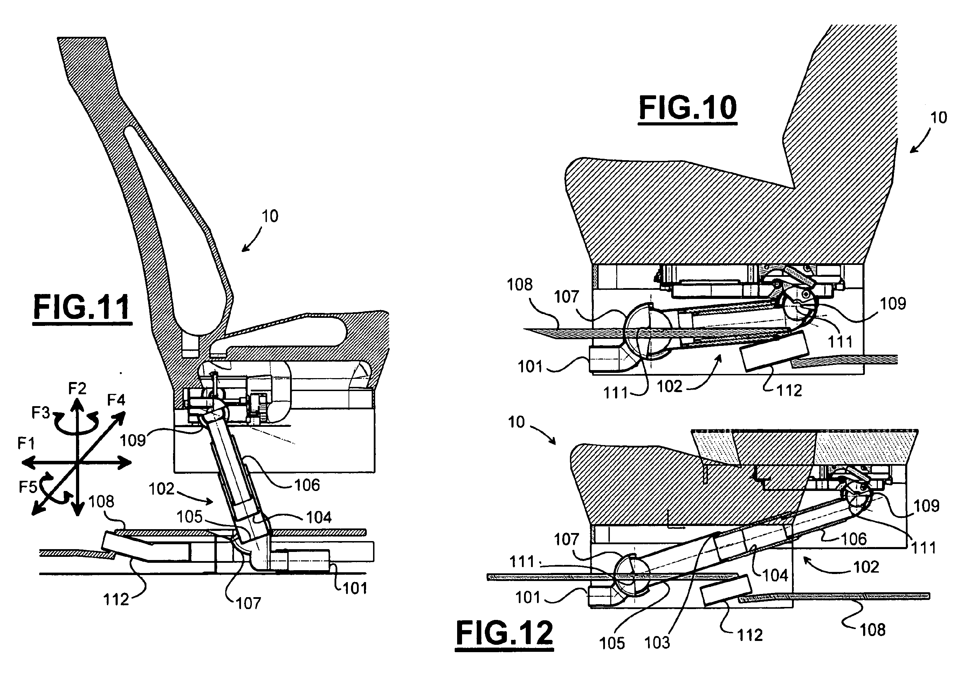

Sur les fig.10 à fig.13, le siège (10) est relié à un conduit d'amenée d'air (101) en provenance selon un exemple préférentiel de réalisation d'une installation principale de ventilation, de chauffage et/ou de climatisation par l'intermédiaire d'un conduit organisé en bras télescopique (102).

Ce bras télescopique (102) comprend des éléments coaxiaux montés successivement coulissants les uns sur les autres, en étant équipés de joints à lèvres (103) pour garantir l'étanchéité du conduit (102). Ces éléments coaxiaux comprennent un élément médian (104) et deux éléments d'extrémité (105,106). Ces derniers sont respectivement articulés sur un premier élément de connexion aéraulique (107) affecté au plancher (108) du véhicule, et sur un deuxième élément de connexion aéraulique (109) affecté au siège (10).

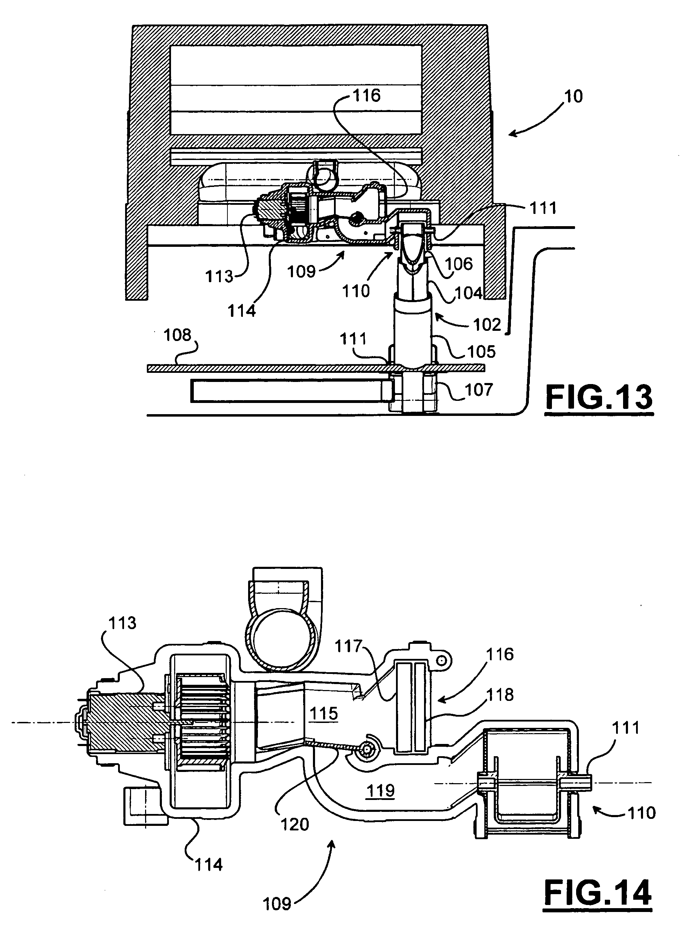

En se reportant plus particulièrement sur la fig.13, les éléments d'extrémités (105,106) du bras télescopique (102) sont articulés sur les éléments de connexion aéraulique (107,109), par l'intermédiaire de paliers (110) que comportent ces derniers. Le montage des éléments d'extrémités (105,106) sur les paliers (110) s'effectue par clipsage de leur axe d'articulation (111) sur ces paliers (110), ces axes d'articulation (111) étant orientés orthogonalement à la direction de déplacement F1 longitudinale du siège (10).

En se reportant successivement aux fig.10 à fig.13, il apparaît que ces dispositions permettent l'acheminement de l'air depuis le conduit d'amenée (101) jusqu'au siège (10), tout en autorisant la mobilité de ce dernier suivant, de façon préférentielle, au moins trois directions de déplacement. Une première direction de déplacement F1 correspond à une mobilité longitudinale du siège (10) ; une deuxième direction de déplacement F2, orthogonale à la précédente F1, correspond à une mobilité verticale du siège (10) ; une troisième direction de déplacement F3 correspond à un pivotement du siège (10) sur lui-même. Les première et deuxième directions de déplacement F1 et F2 sont autorisées à partir d'un déploiement du bras télescopique (102), tandis que la troisième direction de déplacement F3 est autorisée à partir du pivotement des éléments (104,105,106) du bras télescopique (102) les uns par rapport aux autres. La déformabilité du bras télescopique (102) et son articulation sur les éléments de connexion aéraulique (107,109) autorise en outre une mobilité su siège (10) suivant un axe de déplacement transversal F4, orthogonal aux axes de déplacement F1 et F2, et suivant un axe de basculement F5 du siège (10) par rapport au plancher du véhicule (108).

Les éléments de connexion aéraulique (107,109) sont conformés en coquille à rotule qui logent les extrémités correspondantes du bras télescopique (102). Ces dispositions visent à ne pas rompre la liaison aéraulique entre ces éléments de connexion aéraulique (107,109) et le bras télescopique (102), quelle que soit la position ramassée ou déployée de ce dernier, et notamment quelle que soit son inclinaison par rapport au plancher (108) et par rapport à l'assise du siège (10).

Sur la fig.11 plus particulièrement, le premier élément de connexion aéraulique (107) est conformé en boîtier comportant un débouché d'admission d'air en provenance du conduit d'amenée (101), et un débouché de sortie d'air vers le bras télescopique (102). Ce boîtier (107) comporte en outre un débouché d'évacuation d'air vers un conduit d'aération de pied arrière (112), pour constituer en outre et avantageusement un boîtier de liaison entre le conduit de pied arrière (112) et le conduit d'amenée (101).

Sur les fig.13 et fig.14, le deuxième élément de connexion (109) affecté au siège (10) loge une installation secondaire de ventilation et de chauffage. Cette installation secondaire comprend un pulseur relais (113) logé à l'intérieur d'un compartiment de base (114) du deuxième élément de connexion aéraulique (109). Ce compartiment de base (114) est conformé en volute enveloppant le pulseur relais (113). En amont de ce compartiment de base (114), le deuxième élément de connexion aéraulique (109) comporte un premier compartiment ménageant une chambre de mixage (115), qui comporte un débouché (116) d'admission d'air en provenance de l'environnement extérieur, et notamment de l'habitacle du véhicule. Cette chambre de mixage (115) est pourvue d'un filtre à particules (117) et d'un organe de chauffage électrique (118), CTP notamment. Cette chambre de mixage (115) est en outre disposée en aval d'un deuxième compartiment (119) avec lequel elle est communicante par l'intermédiaire d'un organe de répartition 120, tel qu'un volet. Ce deuxième compartiment (119) comporte un débouché d'admission d'air en provenance de l'installation principale, et plus directement en provenance du bras télescopique (102). On remarquera sur la variante illustrée que la chambre de mixage (115) est disposée en surplomb du deuxième compartiment (119) pour éviter un accroissement inopportun de l'encombrement du deuxième élément de connexion aéraulique (109).

La disposition de l'installation secondaire à l'intérieur du boîtier (109) affecté au siège est donnée à titre d'exemple de réalisation, cette installation secondaire étant susceptible d'être disposée de manière analogue à l'intérieur du boîtier (107) affecté au conduit d'amenée (101).

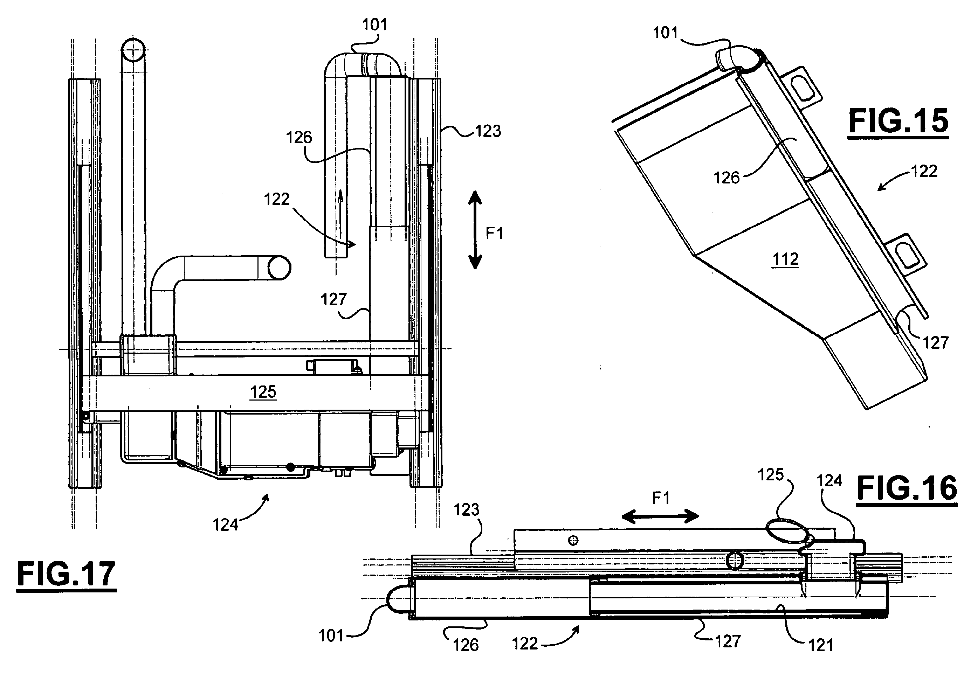

Sur les fig.15 à fig.18, le siège est relié à un conduit d'amenée d'air (101) en provenance d'une installation de ventilation, de chauffage et/ou de climatisation par l'intermédiaire d'un conduit organisé en bras télescopique (121). Ce dernier (121) est logé dans le premier élément de connexion aéraulique, qui est agencé en fourreau (122) fixé au rail (123) de guidage du déplacement en translation longitudinale F1 du siège. Le bras télescopique (121) est relié au deuxième élément de connexion aéraulique (124), qui est lui-même fixé au siège par l'intermédiaire d'une traverse de renfort (125) que comporte ce dernier.

Le fourreau (122) comprend une chambre (126) de réception du bras télescopique (121), qui est prolongée par une goulotte (127) de guidage. Cette goulotte (127) est munie d'un couvercle (128) de protection, solidaire du bras télescopique (121). On remarquera plus particulièrement sur la fig.15 que le fourreau (122) forme avantageusement un ensemble monobloc avec un boîtier de raccordement prévu pour la mise en relation entre le conduit de pied (112) et le conduit d'amenée (101).

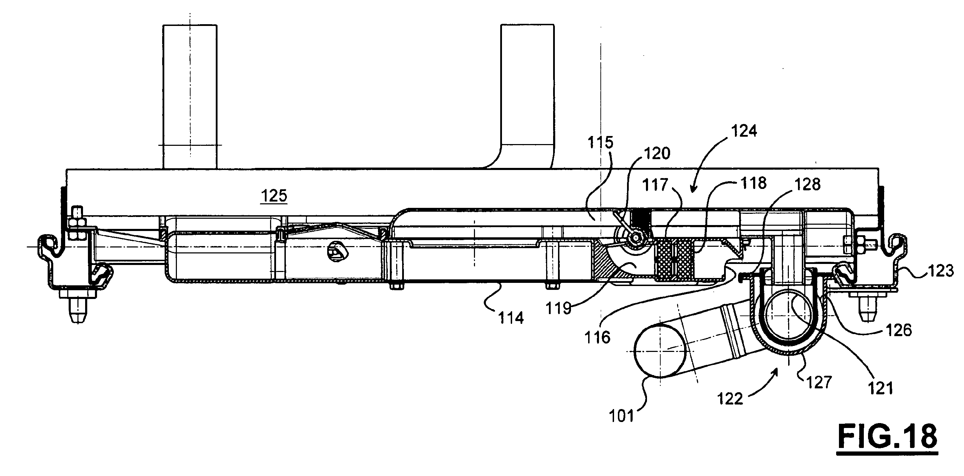

Sur les fig.17 et fig.18, le deuxième élément de connexion aéraulique (124) est organisé de manière analogue à celui (109) de la variante de réalisation représenté sur les fig.13 et fig.14. Plus particulièrement le deuxième élément de connexion aéraulique (124) comporte une chambre de mixage (115) entre l'air en provenance de l'installation principale et l'air en provenance de l'habitacle. Cette chambre de mixage (115) est formée d'un premier compartiment disposé en en amont du pulseur relais (non représenté) et aval d'un deuxième compartiment (119) en relation avec le bras télescopique (121).

On notera que le type de siège équipé du dispositif de la présente invention est utilisé de manière préférée dans un véhicule automobile mais il peut par exemple s'adapter à une salle de spectacle ou de conférence, un cinéma, un avion ou un bateau.

## Revendications

1. Dispositif de jonction entre un siège (10) et un conduit d'amenée (101) d'air comprenant au moins un premier bras (32, 105, 122) affecté au conduit d'amenée (101) d'air dont une première extrémité s'articule à l'intérieur d'un premier élément de connexion aéraulique (50,107,126) affecté au conduit d'amenée (101) d'air et au moins un deuxième bras (34, 106, 124) affecté au siège mobile (10) dont une seconde extrémité s'articule à l'intérieur d'un second élément de connexion aéraulique (53, 109, 115) de liaison fixé au siège (10) formant un conduit de liaison (30,102,121) à géométrie variable selon au moins un degré de liberté de sorte que la mobilité du siège (10) soit autorisée
**caractérisé en ce qu'**une chambre de mixage (115) est ménagée dans l'un quelconque des éléments de connexion aéraulique (50,107,122 ; 53,109,124) pour mélanger de l'air en provenance de l'habitacle avec l'air en provenance du conduit d'amenée (101).

2. Dispositif selon la revendication 1, **caractérisé en ce que** l'un quelconque des éléments de connexion aéraulique (50,107,122 ; 53,109,124) est conformé en boîtier.

3. Dispositif selon la revendication 2, **caractérisé en ce que** l'un quelconque des éléments de connexion aéraulique (50,107,122 ;53,109,124) loge une organe relais de propulsion d'air (20,113).

4. Dispositif selon l'une quelconque des revendications précédentes dans lequel le siège (10) est mobile selon au moins une direction de déplacement, **caractérisé en ce que** le conduit (20,102) est déformable suivant cette direction de déplacement du siège (10).

5. Dispositif selon la revendication 4, dans lequel le siège est mobile suivant l'une quelconque au moins des directions comprenant une direction de déplacement longitudinale (F1), une direction verticale (F2) orthogonale à la précédente, une direction transversale (F4) orthogonale aux deux directions précédentes, une direction (F3) en pivotement du siège (10) sur lui-même, et précédentes, une direction (F3) en pivotement du siège (10) sur lui-même, et une direction (F5) en basculement du siège (10) par rapport au plancher (108).

6. Dispositif selon la revendication 1, **caractérisé en ce que** la chambre de mixage (115) est équipée d'un organe (118) de chauffage secondaire de l'air en provenance de l'habitacle.

7. Dispositif selon la revendications 6, **caractérisé en ce que** le dit élément de connexion aéraulique (109,124) comporte un premier compartiment ménageant la chambre de mixage (115), qui est disposé en aval d'un deuxième compartiment (119) d'admission de l'air en provenance de l'installation principale, ces deux compartiments (115,119) étant séparés par un répartiteur (120).

8. Dispositif selon l'une quelconque des revendications 6 et 7, **caractérisé en ce que** la chambre de mixage (115) est disposée en amont de l'organe de propulsion d'air (113).

9. Dispositif selon l'une quelconque des revendications 6 et 7, **caractérisé en ce que** la chambre de mixage (115) est ménagée dans le deuxième élément de connexion (109,124).

10. Dispositif selon la revendication 1, **caractérisé en ce que** le premier élément de connexion aéraulique (50,107,122) est conformé en boîtier de liaison avec un conduit en provenance du conduit d'amenée (101).

11. Dispositif selon la revendication 10, **caractérisé en ce que** le premier élément de connexion aéraulique (50,107,122) forme un ensemble monobloc avec un boîtier de raccordement d'un conduit d'aération de pied arrière (112) avec le conduit d'amenée d'air (101).

12. Dispositif selon l'une quelconque des revendications précédentes, **caractérisé en ce que** l'un quelconque des éléments de connexion aéraulique (50,107,122 ;53,109,124) est conformé en boîtier ménageant la volute de l'organe de propulsion d'air (20,113).

13. Dispositif selon l'une quelconque des revendications précédentes, **caractérisé en ce que** les éléments de connexion aéraulique (50,107 ;53,124) sont chacun conformés en boîtier de liaison, sur lesquels boîtiers est en prise articulée le conduit (30,102).

14. Dispositif selon l'une quelconque des revendications précédentes, dans lequel la première extrémité (32a) du premier bras (34b) et la seconde extrémité (34b) du second bras (34) sont reliées respectivement de manière étanche à l'air à leur boîtier correspondant (50 ; 53).

15. Dispositif selon l'une quelconque des revendications précédentes, dans lequel le conduit (30) forme un pantographe à au moins deux bras (32, 34) articulés à leur jonction.

16. Dispositif selon la revendication 15, dans lequel les au moins deux bras sont articulés autour d'au moins un axe de rotation (XX') sensiblement perpendiculaire aux deux directions de déplacement du siège (10).

17. Dispositif selon la revendication 16, dans lequel, le siège (10) étant déplaçable respectivement selon deux directions (F1 ;F2) sensiblement perpendiculaires l'une à l'autre, les deux bras (32, 34) du conduit (30) sont articulés autour d'un axe de rotation (XX') perpendiculaire aux deux directions de déplacement du siège.

18. Dispositif selon l'une quelconque des revendications précédentes, dans lequel les deux bras (32, 34) sont articulés par une liaison pivot (35) en forme de coude reliant une seconde extrémité (32b) du au moins premier bras (32) et une première extrémité (34a) du au moins second bras (34).

19. Dispositif selon l'une quelconque des revendications précédentes, dans lequel deux flancs latéraux (38, 39) sont en outre prévus de part et d'autre de la liaison entre les bras (32, 34) pour assurer et compléter l'étanchéité à l'air du conduit (30).

20. Dispositif selon la revendication 19, dans lequel lesdits flancs sont munis de gorges externes et internes (40, 42) d'étanchéité et de guidage en rotation des bras articulés (32, 34).

21. Dispositif selon l'une quelconque des revendications précédentes, dans lequel dans lequel les deux bras (32, 34) sont articulés par une liaison rotule au niveau d'un coude (35) reliant une seconde extrémité (32b) du au moins premier bras (32) et une première extrémité (34a) du au moins second bras.

22. Dispositif selon la revendication 21, dans lequel la plage de rotation angulaire des bras (32, 34) entre eux est comprise entre 0° et au moins sensiblement 180°.

23. Dispositif selon la revendication 22, dans lequel la plage de rotation angulaire des bras (32, 34) entre eux est sensiblement égale à 360°

24. Dispositif selon l'une quelconque des revendications précédentes, **caractérisé en ce que** le siège (10) est un siège conducteur ou d'un passager avant d'un véhicule automobile.

25. Dispositif selon l'une quelconque des revendications précédentes, **caractérisé en ce que** le conduit est organisé en bras télescopique (102) à au moins deux éléments d'extrémités à axes parallèles (104,105,106), qui sont respectivement en prise articulée sur l'élément de connexion aéraulique correspondant (107,109).

26. Dispositif selon la revendication 25, **caractérisé en ce que** le bras télescopique (102) comprend deux éléments d'extrémité (105,106) respectivement articulés sur les éléments de connexion aéraulique (109,107), et un élément médian (104).

27. Dispositif selon l'une quelconque des revendications 25 et 26, **caractérisé en ce que** le bras télescopique (102) est mobile en rotation sur lui-même pour autoriser une rotation du siège (10) sur lui-même, et est mobile en pivotement sur les éléments de connexion aéraulique (109,107) autour d'axes de pivotement respectifs (111).

28. Dispositif selon l'une quelconque des revendications 1 à 14, **caractérisé en ce que** le premier élément de connexion aéraulique (122) est agencé en fourreau recevant le conduit liaison agencé en bras télescopique (121).

29. Dispositif selon la revendication 28, **caractérisé en ce que** ie fourreau est fixé à un rail (123) de guidage du siège (10).

30. Dispositif selon l'une quelconque des revendications 28 et 29, **caractérisé en ce que** le fourreau comporte une chambre (126) de réception du bras télescopique (121) pour sa mise en relation avec l'installation principale, cette chambre (126) étant prolongée par une goulotte (127) de guidage en translation du bras télescopique (121).

31. Dispositif selon la revendication 30, **caractérisé en ce que** la goulotte (127) est munie d'un couvercle de protection (128).

32. Dispositif selon la revendication 31, **caractérisé en ce que** le couvercle (128) est solidaire du bras télescopique (121).

33. Dispositif selon l'une quelconque des revendications 29 à 32, **caractérisé en ce que** le bras télescopique (121) est muni de nervures de guidage radial à l'intérieur du fourreau (122).

34. Dispositif selon l'une quelconque des revendications 1 à 14, **caractérisé en ce que** le conduit est organisé en conduit souple en prise à chacune de ses extrémités sur un élément de connexion aéraulique respectif.

## Claims

1. Connection device between a seat (10) and an air delivery conduit (101) including at least one first arm (32, 105, 122) assigned to the air delivery conduit (101) of which a first end pivots inside a first aeraulic connection element (50, 107, 126) assigned to the air delivery conduit (101) and at least one second arm (34, 106, 124) assigned to the mobile seat (10) of which a second end pivots inside a second aeraulic connection element (53, 109, 115) attached to the seat (10) forming a connecting conduit (30, 102, 121) with a variable shape according to at least one degree of freedom to allow for mobility of the seat (10),
**characterised in that** a mixing chamber (115) is provided in any one of the aeraulic connection elements (50, 107, 122; 53, 109, 124), for mixing the air coming from the cabin with the air coming from the delivery conduit (101).

2. Device according to claim 1, **characterised in that** any one of the aeraulic connection elements (50, 107, 122; 53, 109, 124) has a box shape.

3. Device according to claim 2, **characterised in that** any one of the aeraulic connection elements (50, 107, 122; 53, 109, 124) houses an air propulsion relay component (20, 113).

4. Device according to any one of the previous claims in which the seat (10) is mobile in at least one direction of movement, **characterised in that** the conduit (20, 102) is deformable in this direction of movement of the seat (10).

5. Device according to claim 4, in which the seat is mobile in at least one of the directions including a longitudinal direction of movement (F1), a vertical direction (F2) orthogonal to the latter, a transverse direction (F4) orthogonal to the previous two direction, a direction (F3) in which the seat (10) rotates about its axis, and the previous directions, a direction (F3) in which the seat (10) rotates about its axis, and a direction (F5) in which the seat (10) tilts with respect to the floor (108).

6. Device according to claim 1, **characterised in that** the mixing chamber (115) is equipped with a component (118) for secondary heating of the air coming from the cabin.

7. Device according to claim 6, **characterised in that** said aeraulic connection element (109, 124) comprises a first compartment housing the mixing chamber (115), which is arranged downstream of a second compartment (119) for taking in air coming from the main installation, which two compartments (115, 119) are separated by a distributor (120).

8. Device according to any one of claims 6 and 7, **characterised in that** the mixing chamber (115) is arranged upstream of the air propulsion component (113).

9. Device according to any one of claims 6 or 7, **characterised in that** the mixing chamber (115) is housed in the second connection element (109, 124).

10. Device according to claim 1, **characterised in that** the first aeraulic connection element (50, 107, 122) is shaped as a box connected to a conduit coming from the delivery conduit (101).

11. Device according to claim 10, **characterised in that** the first aeraulic connection element (50, 107, 122) forms a one-piece assembly with a box for connecting a rear foot aeration conduit (112) with the air delivery conduit (101).

12. Device according to any one of the previous claims, **characterised in that** any one of the aeraulic connection elements (50, 107, 122; 53, 109, 124) is shaped as a box housing the scroll of the air propulsion component (20, 113).

13. Device according to any one of the previous claims, **characterised in that** the aeraulic connection elements (50, 107; 53, 124) are each shaped as connection boxes, with which boxes the conduit (30, 102) is pivotably engaged.

14. Device according to any one of the previous claims, **characterised in that** the first end (32a) of the first arm (34b) and the second end.(34b) of the second arm (34) are respectively connected, in an airtight manner, to their corresponding boxes (50; 53).

15. Device according to any one of the previous claims, in which the conduit (30) forms a pantograph with at least two arms (32, 34) pivoted at their point of connection.

16. Device according to claim 15, in which the at least two arms are pivoted about at least one rotation axis (XX') substantially perpendicular to the two directions of movement of the seat (10).

17. Device according to claim 16, in which, the seat (10) being movable respectively in two directions (F1; F2) substantially perpendicular to one another, the two arms (32, 34) of the conduit (30) are pivoted about a rotation axis (XX') perpendicular to the two directions of movement of the seat.

18. Device according to any one of the previous claims, in which the two arms (32, 34) are pivoted by an elbow-shaped pivot pin (35) connecting a second end (32b) of the at least first arm (32) and a first end (34a) of the at least second arm (34).

19. Device according to any one of the previous claims, in which two lateral sides (38, 39) are also provided on each side of the connection between the arms (32, 34) to ensure and complete the airtightness of the conduit (30).

20. Device according to claim 19, in which said sides are equipped with external and internal grooves (40, 42) for tightness and rotational guiding of the pivoted arms (32, 34).

21. Device according to any one of the previous claims, in which the two arms (32, 34) are pivoted by a swivel at the level of an elbow (35) connecting a second end (32b) of the at least first arm (32) and a first end (34a) of the at least second arm.

22. Device according to claim 21, in which the range of angular rotation of the arms (32, 34) with respect to one another is between 0° and at least substantially 180°.

23. Device according to claim 22, in which the range of angular rotation of the arms (32, 34) with respect to one another is substantially 360°.

24. Device according to any one of the previous claims, in which the seat (10) is a driver or front passenger seat of a motor vehicle.

25. Device according to any one of the previous claims, **characterised in that** the conduit is arranged as a telescopic arm (102) with at least two end elements having parallel axes (104, 105, 106), which are respectively pivotably engaged with the corresponding aeraulic connection element (107, 109).

26. Device according to claim 25, **characterised in that** the telescopic arm (102) includes two end elements (105, 106) respectively pivotably connected to the aeraulic connection elements (109, 107) and a middle element (104).

27. Device according to any one of claims 25 or 26, **characterised in that** the telescopic arm (102) is capable of moving in rotation about its own axis so as to allow for rotation of the seat (10) about its own axis, and is capable of pivoting with respect to the aeraulic connection elements (109, 107) about respective pivot pins (111).

28. Device according to any one of claims 1 to 14, **characterised in that** the first aeraulic connection element (122) is provided as a sheath receiving the connecting conduit in the form of a telescopic arm (121).

29. Device according to claim 28, **characterised in that** the sheath is attached to a guide (123) for guiding the seat (10).

30. Device according to any one of claims 28 or 29, **characterised in that** the sheath comprises a chamber (126) for receiving the telescopic arm (121) for its connection with the main installation, which chamber (126) is extended by a channel (127) for guiding the telescopic arm (121) in translation.

31. Device according to claim 30, **characterised in that** the channel (127) is equipped with a protective cover (128).

32. Device according to claim 31, **characterised in that** the cover (128) is secured to the telescopic arm (121).

33. Device according to any one of claims 29 to 32, **characterised in that** the telescopic arm (121) is equipped with grooves for radial guide ribs inside the sheath (122).

34. Device according to any one of claims 1 to 14, **characterised in that** the conduit is arranged as a flexible conduit engaged at each of its ends with a respective aeraulic connection element.

## Patentansprüche

1. Verbindungsvorrichtung zwischen einem Sitz (10) und einer Luftzufuhrleitung (101), die mindestens einen ersten Arm (32, 105, 122) umfasst, welcher der Luftzufuhrleitung (101) zugewiesen ist, bei der ein erstes Ende in einem ersten pneumatischen Verbindungselement (50, 107, 126) gelenkig verbunden ist, das der Luftzufuhrleitung (101) zugewiesen ist und mindestens einen zweiten Arm (34, 106, 124), welcher dem beweglichen Sitz (10) zugewiesen ist, bei dem ein zweites Ende in einem zweiten pneumatischen Verbindungselement (53, 109, 115) gelenkig verbunden ist, das auf dem Sitz (10) befestigt ist und eine Verbindungsleitung (30, 102, 121) mit variabler Geometrie bildet, gemäß mindestens einem Freiheitsgrad, so dass der Sitz (10) bewegt werden kann,
**dadurch gekennzeichnet, dass** eine Mischkammer (115) beliebig in einem der pneumatischen Verbindungselemente (50, 107, 122; 53, 109, 124) angeordnet ist, um die Luft, die aus dem Fahrerhaus austritt, mit der Luft zu vermischen, die aus der Zufuhrleitung (101) kommt.

2. Vorrichtung nach Anspruch 1, **dadurch gekennzeichnet, dass** beliebig eines der pneumatischen Verbindungselemente (50, 107, 122; 53, 109, 124) an das Gehäuse angepasst ist.

3. Vorrichtung nach Anspruch 2, **dadurch gekennzeichnet, dass** beliebig eines der pneumatischen Verbindungselemente (50, 107, 122; 53, 109, 124) ein Relaisorgan für den Luftantrieb (20, 113) aufnimmt.

4. Vorrichtung nach einem der vorstehenden Ansprüche, bei der der Sitz (10) in mindestens einer Verschieberichtung beweglich ist, **dadurch gekennzeichnet, dass** die Leitung (20, 102) gemäß dieser Verschieberichtung des Sitzes (10) verformt werden kann.

5. Vorrichtung nach Anspruch 4, bei der der Sitz gemäß mindestens einer beliebigen Richtung beweglich ist und eine Längsverschieberichtung (F1) sowie eine senkrechte Richtung (F2) umfasst, die sich mit der vorhergehenden Richtung schneidet, eine transversale Richtung (F4), die sich mit den beiden vorhergehenden Richtungen schneidet, eine Richtung (F3) zum Schwenken des Sitzes (10) um sich selbst und in die vorherigen Richtungen, eine Richtung (F3) zum Schwenken des Sitzes (10) um sich selbst und eine Richtung (F5) zum Kippen des Sitzes (10) bezogen auf den Boden (108).

6. Vorrichtung nach Anspruch 1, **dadurch gekennzeichnet, dass** die Mischkammer (115) mit einem sekundären Heizungsorgan (118) für die Luft ausgerüstet ist, die aus dem Fahrerhaus austritt.

7. Vorrichtung nach Anspruch 6, **dadurch gekennzeichnet, dass** das besagte pneumatische Verbindungselement (109, 124) ein erstes Fach umfasst, in dem die Mischkammer (115) untergebracht ist, die unter einem zweiten Fach (119) für den Eintritt der Luft angeordnet ist, die aus der Hauptanlage kommt, wobei diese beiden Fächer (115, 119) durch einen Verteiler (120) getrennt sind.

8. Vorrichtung nach einem der Ansprüche 6 und 7, **dadurch gekennzeichnet, dass** die Mischkammer (115) über dem Organ für den Luftantrieb (113) angeordnet ist.

9. Vorrichtung nach einem der Ansprüche 6 und 7, **dadurch gekennzeichnet, dass** die Mischkammer (115) in dem zweiten Verbindungselement (109, 124) angeordnet ist.

10. Vorrichtung nach Anspruch 1, **dadurch gekennzeichnet, dass** das erste pneumatische Verbindungselement (50, 107, 122) mit einer Leitung, die aus der Zufuhrleitung (101) kommt, an das Verbindungsgehäuse angepasst ist.

11. Vorrichtung nach Anspruch 10, **dadurch gekennzeichnet, dass** das erste pneumatische Verbindungselement (50, 107, 122) eine aus einem Stück bestehende Gruppe mit einem Gehäuse zur Verbindung einer hinteren Fußlüftungsleitung (112) mit der Luftzufuhrleitung (101) bildet.

12. Vorrichtung nach einem der vorstehenden Ansprüche, **dadurch gekennzeichnet, dass** beliebig eines der pneumatischen Verbindungselemente (50, 107, 122; 53, 109, 124) an das Gehäuse angepasst ist, in dem die Spirale des Luftantriebsorgans (20, 113) angeordnet ist.

13. Vorrichtung nach einem der vorstehenden Ansprüche, **dadurch gekennzeichnet, dass** jedes der pneumatischen Verbindungselemente (50, 107; 53, 124) an das Verbindungsgehäuse angepasst ist, wobei die Leitung (30, 102) an diese Gehäuse gelenkig eingreift.

14. Vorrichtung nach einem der vorstehenden Ansprüche, bei der das erste Ende (32a) des ersten Armes (34b) und das zweite Ende (34b) des zweiten Armes (34) jeweils luftdicht mit ihrem entsprechenden Gehäuse (50; 53) verbunden ist.

15. Vorrichtung nach einem der vorstehenden Ansprüche, bei der die Leitung (30) einen Pantograph mit mindestens zwei Armen (32, 34) bildet, die mit ihrer Verbindung gelenkig gelagert sind.

16. Vorrichtung nach Anspruch 15, bei der zumindest die beiden Arme gelenkig um mindestens eine Drehachse (XX') gelagert sind und zwar deutlich senkrecht zu den beiden Verschieberichtungen des Sitzes (10).

17. Vorrichtung nach Anspruch 16, bei der der Sitz (10) jeweils in zwei Richtungen (F1; F2) verschiebbar ist und zwar deutlich senkrecht zueinander, wobei die beiden Arme (32, 34) der Leitung (30) gelenkig um eine Drehachse (XX') gelagert sind, senkrecht zu den beiden Verschieberichtungen des Sitzes.

18. Vorrichtung nach einem der vorstehenden Ansprüche, bei der die beiden Arme (32, 34) durch eine Zapfenverbindung (35) in Winkelform gelenkig gelagert sind und ein zweites Ende (32b) zumindest von einem ersten Arm (32) und ein erstes Ende (34a) zumindest von einem zweiten Arm (34) verbinden.

19. Vorrichtung nach einem der vorstehenden Ansprüche, bei der zwei seitliche Flanken (38, 39) außerdem beiderseits der Verbindung zwischen den Armen (32, 34) vorgesehen sind, um die Luftdichtigkeit der Leitung (30) zu garantieren und zu ergänzen.

20. Vorrichtung nach Anspruch 19, bei der die besagten Flanken mit externen und internen Dicht- und Führungsrillen (40, 42) bei Rotation der gelenkig gelagerten Arme (32, 34) versehen sind.

21. Vorrichtung nach einem der vorstehenden Ansprüche, bei der die beiden Arme (32, 34) durch eine Kugelgelenkverbindung im Bereich eines Kniestücks (35) gelenkig gelagert sind, die ein zweites Ende (32b) zumindest von dem erste Arm (32) und ein erstes Ende (34a) zumindest von dem zweiten Arm verbindet.

22. Vorrichtung nach Anspruch 21, bei der der Winkelrotationsbereich der Arme (32, 34) untereinander zwischen 0° und mindestens genau 180° liegt.

23. Vorrichtung nach Anspruch 22, bei der der Winkelrotationsbereich der Arme (32, 34) untereinander genau gleich 360° beträgt.

24. Vorrichtung nach einem der vorstehenden Ansprüche, **dadurch gekennzeichnet, dass** es sich bei dem Sitz (10) um einen vorderen Fahrer- oder Beifahrersitz eines Kraftfahrzeugs handelt.

25. Vorrichtung nach einem der vorstehenden Ansprüche, **dadurch gekennzeichnet, dass** die Leitung bei mindestens zwei Endstücken mit parallelen Achsen (104, 105, 106) mit Teleskoparm (102) ausgeführt ist, die jeweils gelenkig gelagert auf das entsprechende pneumatische Verbindungselement (107, 109) eingreifen.

26. Vorrichtung nach Anspruch 25, **dadurch gekennzeichnet, dass** der Teleskoparm (102) zwei Endelemente (105, 106) umfasst, die jeweils gelenkig auf den pneumatischen Verbindungselementen (109, 107) und einem mittleren Element (104) gelagert sind.

27. Vorrichtung nach einem der Ansprüche 25 und 26, **dadurch gekennzeichnet, dass** der Teleskoparm (102) um sich selbst drehbar ist, um eine Drehung des Sitzes (10) um sich selbst zu ermöglichen und auf den pneumatischen Verbindungselementen (109, 107) um die entsprechenden Schwenkachsen (111) herum schwenkbar ist.

28. Vorrichtung nach einem der Ansprüche 1 bis 14, **dadurch gekennzeichnet, dass** das erste pneumatische Verbindungselement (122) in einer Muffe angeordnet ist, welche die Verbindungsleitung aufnimmt, die in dem Teleskoparm (121) angeordnet ist.

29. Vorrichtung nach Anspruch 28, **dadurch gekennzeichnet, dass** die Muffe an der Führungsschiene (123) des Sitzes (10) befestigt ist.

30. Vorrichtung nach einem der Ansprüche 28 und 29, **dadurch gekennzeichnet, dass** die Muffe eine Kammer (126) zur Aufnahme des Teleskoparms (121) umfasst, um letzteren mit der Hauptanlage zu verbinden, wobei diese Kammer (126) durch eine Führungsrinne (127) bei Parallelverschiebung des Teleskoparms (121) verlängert wird.

31. Vorrichtung nach Anspruch 30, **dadurch gekennzeichnet, dass** die Führungsrinne (127) mit einem Schutzdeckel (128) versehen ist.

32. Vorrichtung nach Anspruch 31, **dadurch gekennzeichnet, dass** der Schutzdeckel (128) fest mit dem Teleskoparm (121) verbunden ist.

33. Vorrichtung nach einem der Ansprüche 29 bis 32, **dadurch gekennzeichnet, dass** der Teleskoparm (121) mit Führungsrippen versehen ist, die radial in der Muffe (122) angeordnet sind.

34. Vorrichtung nach einem der Ansprüche 1 bis 14, **dadurch gekennzeichnet, dass** die Leitung als geschmeidige Leitung ausgeführt ist, die an jedem ihrer Enden auf ein entsprechendes pneumatisches Verbindungselement eingreift.
